**Europäisches Patentamt**

**European Patent Office**

**Office européen des brevets**

(11) Veröffentlichungsnummer: **0 095 595**
**A1**

(12) **EUROPÄISCHE PATENTANMELDUNG**

(21) Anmeldenummer: **83104459.9**

(22) Anmeldetag: **06.05.83**

(51) Int. Cl.³: **F 16 B 4/00**

(30) Priorität: **28.05.82 DE 3220193**

(43) Veröffentlichungstag der Anmeldung: **07.12.83**
**Patentblatt 83/49**

(84) Benannte Vertragsstaaten: **AT BE CH DE FR GB IT LI NL SE**

(71) Anmelder: **METZELER KAUTSCHUK GMBH, Gneisenaustrasse 15, D-8000 München 50 (DE)**

(72) Erfinder: **Rachel, Josef, Erikastrasse 13a, D-8190 Wolfratshausen (DE)**
Erfinder: **Wagner, Bernd, Juchaczstrasse 56, D-5410 Höhr-Grenzhausen (DE)**

(74) Vertreter: **Michelis, Theodor, Dipl.-Ing., Gneisenaustrasse 15, D-8000 München 50 (DE)**

(54) **Verfahren zum Einbringen eines Ringkörpers für einen Torsionsschwingungstilger.**

(57) Bei einem Verfahren zum Einbringen eines Ringkörpers (02) aus elastomerem Material in den Spalt zwischen dem Nabenkörper und dem Schwungring (01) eines Torsionsschwingungstilgers wird der Ringkörper auf Soll-Abmessungen gebracht, die den Abmessungen des Spaltes angepaßt sind; in dieser Form wird der Ringkörper durch Abkühlen auf eine Temperatur unterhalb seiner Glasübergangstemperatur fixiert, so daß das Einbringen in den Spalt möglich ist. Bei der anschließenden Erwärmung will sich der Ringkörper ausdehnen und liegt dabei kraftschlüssig an der Innenfläche des Schwungrings bzw. der Außenfläche des Nabenkörpers an.

Die Abkühlung kann durch Trockeneis oder durch flüssigen Stickstoff erfolgen.

1.Stufe:

2.Stufe:

3.Stufe: Abkühlung + Entfernung von 03 + 04

4.Stufe:

5.Stufe: Haftung durch Erwärmung

0095595

METZELER KAUTSCHUK GMBH

Höhr-Grenzhausen

Unser Zeichen: MK 314 P 82 EP

München, den 26.4.1983

## Verfahren zum Einbringen eines Ringkörpers für einen Torsionsschwingungstilger

Die Erfindung betrifft ein Verfahren zum Einbringen eines Ringkörpers aus elastomerem Material in den Spalt zwischen dem Nabenkörper und dem Schwungring eines Torsionsschwingungstilgers.

Zum Einbringen von vorgespannten Ringkörpers aus elastomerem Material in den Spalt zwischen dem Nabenkörper und dem Schwungring eines Torsionsschwingungstilgers sind mehrere Verfahren vorgeschlagen worden; bei einem ersten Verfahren wird die Dicke des Ringkörpers in mehreren Zügen bei gleichzeitiger Längung verjüngt, so daß der Ringkörper mit hoher Geschwindigkeit in den Spalt "eingeschossen" werden kann.

Bei einem zweiten Verfahren wird der Ringkörper unter rotatorischer Vibration des Nabenkörpers und/oder des Schwungrings mit relativ hohem Druck in den Spalt eingepreßt; dieses Verfahren wird auch als "Einrütteln" bezeichnet.

Schließlich ist es im Prinzip auch noch möglich, den unverspannten Ringkörper in den Spalt einzubringen und die erforderliche Vorspannung durch nachträgliche Verformung des Nabenkörpers und/oder des Schwungrings zu erreichen.

0095595

In allen Fällen beruht die axiale Rutschsicherung zwischen Nabenkörper und Ringkörper einerseits und Ringkörper und Schwungring andererseits auf der entsprechenden Formgebung der Anschlußflächen, wobei z. B. umlaufende Rippen oder Rillen verwendet werden können.

Die tangentiale Durchrutschsicherung wird durch eine relativ hohe Vorspannung des Ringkörpers sowie die Verwendung von Oberflächen mit hohem Reibungskoeffizienten erreicht.

Probleme treten bei diesen herkömmlichen Verfahren insofern auf, als der reine Form- und Kraftschluß nicht für die Erzielung einer festen Verbindung ausreicht, also im allgemeinen noch zusätzlich ein Haftmittel verwendet werden muß. Bei den herkömmlichen Verfahren wird jedoch dieses Haftmittel beim Einbringen des Ringkörpers aus dem elastomeren Material abgestreift, so daß nicht gewährleistet ist, daß eine ausreichend dicke Haftmittelschicht zurückbleibt.

Der Erfindung liegt deshalb die Aufgabe zugrunde, ein Verfahren zum Einbringen eines Ringkörpers in einen Torsionsschwingungstilger der angegebenen Gattung zu schaffen, bei dem die oben erwähnten Nachteile nicht auftreten.

Insbesondere soll ein Verfahren vorgeschlagen werden, bei dem die Verformung und damit die Vorspannung des Ringkörpers aus dem elastomeren Material auf konstruktiv einfache Weise erzielt wird.

Dies wird erfindungsgemäß durch die im kennzeichnenden Teil des Anspruchs 1 angegebenen Merkmale erreicht.

Zweckmäßige Ausführungsformen sind in den Unteransprüchen zusammengestellt.

Die mit der Erfindung erzielten Vorteile beruhen insbesondere darauf, daß der Ringkörper aus dem elastomeren Material nicht in axialer Richtung in den Spalt eingeschoben wird, wodurch das bereits aufgebrachte Haftmittel abgestreift werden könnte, sondern daß der Ringkörper nur radial verformt und dadurch gegen die entsprechende Anlagefläche gedrückt wird, so daß die aufgebrachte Haftmittelschicht nicht beeinträchtigt werden kann.

Nach dieser Verformung und damit Vorspannung wird der Ringkörper durch Abkühlen auf eine Temperatur unterhalb seiner Glasübergangstemperatur in seiner Form fixiert, so daß ohne Probleme das entsprechende Gegenteil angesetzt werden kann. Bei der anschließenden Erwärmung dehnt sich der Ringkörper aus und sitzt damit unter Vorspannung in dem Spalt zwischen dem Nabenkörper und dem Schwungring.

Es hat sich herausgestellt, daß die Glasübergangstemperatur der üblicherweise verwendeten Gummimischungen bei etwa -70 ° C liegt, so daß zur Abkühlung auf die erforderliche Temperatur die Verwendung von Trockeneis ausreicht; zur Erhöhung der Abkühlgeschwindigkeit und damit zur Verkürzung des Verfahrensablaufes kann stattdessen auch flüssiger Stückstoff eingesetzt werden.

Zweckmäßigerweise werden auf die Außenfläche des Nabenkörpers und/oder die Innenfläche des Schwungrings Haftmittel bzw. Haftvermittler aufgebracht, um die Festigkeit der Verbindung zu erhöhen.

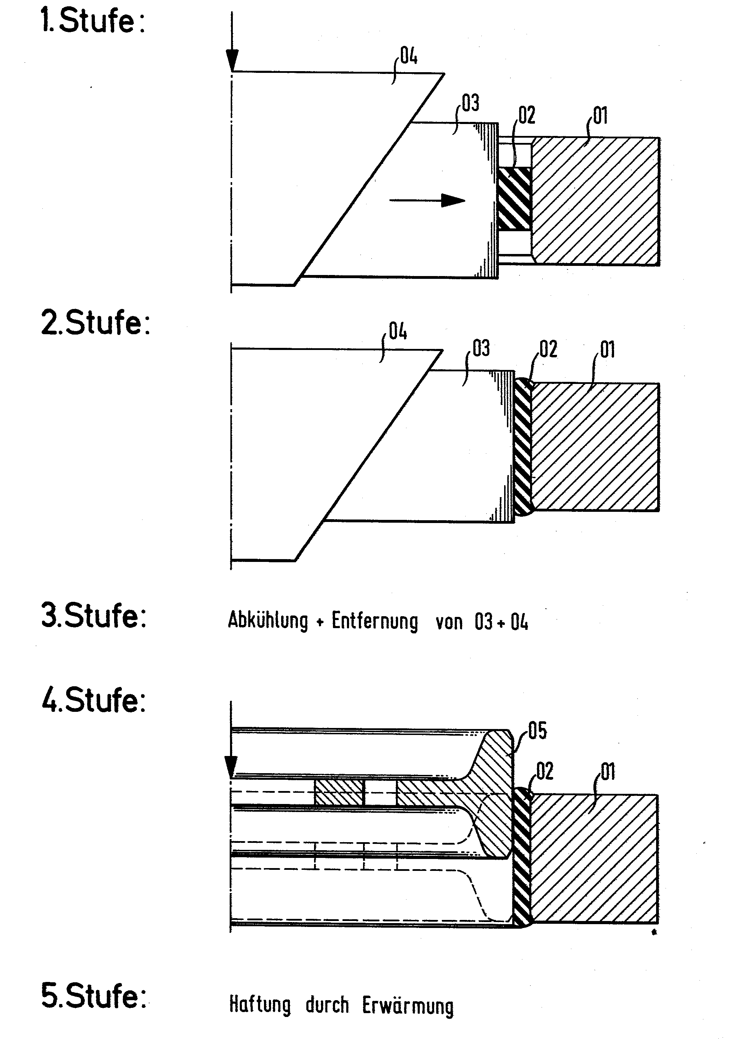

Die Erfindung wird im folgenden anhand eines Ausführungsbeispiels unter Bezugnahme auf die beiliegende Figur näher erläutert, welche die sechs verschiedenen Stufen des Verfahrens zum Einbringen eines Ringkörpers in den Spalt eines Torsionsschwingungstilgers zeigt.

Für dieses Verfahren wird von einem Ringkörper 02 aus einem elastomeren Material, insbesondere aus Gummi, mit einer Form und Größe, insbesondere einem Durchmesser, ausgegangen, die kleiner als die entsprechenden Abmessungen des Spaltes zwischen dem Nabenkörper und dem Schwungring des fertigen Torsionsschwingungstilgers sind. Dieser Ringkörper 02 wird durch eine Spannvorrichtung aus einem Segmentring 03 und einem in dem Segmentring 03, beispielsweise mechanisch, pneumatisch oder hydraulisch verschiebbaren Konuskörper 04 radial expandiert und dadurch gegen die Innenfläche eines Schwungrings 01 gedrückt, die mit einem Haftmittel versehen ist. Die dadurch erzielte Durchmesservergrößerung und Verringerung der radialen Dicke des Ringkörpers 01 führt zu einer Vergrößerung der axialen Dicke, bis schließlich bestimmte, vorgegebene Soll-Abmessungen erreicht werden, wie sich aus dem Vergleich zwischen erster Stufe und zweiter Stufe ergibt.

Nachdem der Ringkörper 02 die Soll-Abmessungen hat, wird er, durch Verwendung von Trockeneis oder flüssigem Stickstoff, auf eine Temperatur unterhalb der Glasübergangstemperatur seines elastomeren Materials abgekühlt und dadurch in der Form mit den Soll-Abmessungen fixiert. Dies erfolgt in der dritten Stufe.

Nach dem Erreichen dieser Temperatur wird die Spannvorrichtung, bestehend aus Segmentring 03 und Konuskörper 04, aus dem Ringkörper 02 entfernt und der mit einem Haftmittel versehene Nabenkörper 02 im Innenraum des Verbundes aus Ringkörper 02 und Schwungring 01 positioniert. Zu diesem Zweck wird der Nabenkörper 05 axial von oben in den Innenraum des Ringkörpers 02 eingeschoben, wie in der vierten Stufe durch den Pfeil angedeutet ist. Wesentlich ist dabei, daß zwischen dem Ringkörper 02 und dem Nabenkörper 05 ein kleiner Luftspalt ausgebildet ist, der das Abstreifen des Haftmittels verhindert.

Anschließend wird dieser Verbund aus Nabenkörper 05, Ringkörper 02 und Schwungring 01 auf Raumtemperatur erwärmt, wozu entweder die Umgebungswärme oder zur Beschleunigung der Erwärmung eine zusätzliche Heizquelle verwendet werden kann, wodurch sich der Ringkörper 02 wieder auf seine Soll-Abmessungen ausdehnen will und dadurch in dem Spalt zwischen Nabenkörper 05 und Schwungring 01 fixiert wird. Zusätzlich zu diesem Kraftschluß zwischen den drei Bauteilen wirken noch die Haftmittel, so daß sich insgesamt eine sehr feste und stabile Verbindung ergibt. Dieser Zustand ist in der fünften Stufe angedeutet.

Als Alternative zu dem dargestellten Verfahrensablauf ist es auch möglich, den Ringkörper 02 mittels der Spannvorrichtung 03, 04 radial von außen nach innen gegen die Außenfläche des Nabenkörpers 05 zu drücken und dann anschließend, d. h. nach der Abkühlung des Ringkörpers 02 auf eine Temperatur unterhalb der Glasübergangstemperatur, den Schwungring 01 von außen auf den Ringkörper 02 zu stülpen. Auch in diesem Fall ergibt sich eine sichere und feste Verbindung zwischen Nabenkörper 05, Ringkörper 02 und Schwungring 01.

Zweckmäßigerweise werden die einzelnen Verfahrensschritte in einer Stickstoff-Atmosphäre durchgeführt, beispielsweise in einem abgeschlossenen, mit Stickstoff gefüllten Raum, um eine Wasserbildung durch Kondensation der Luftfeuchtigkeit auf den Haftflächen zu verhindern.

0095595

METZELER KAUTSCHUK GMBH

Unser Zeichen: MK 314 P 82 EP
München, den 26.4.1983.

Patentansprüche

1. Verfahren zum Einbringen eines Ringkörpers aus elastomerem Material in den Spalt zwischen dem Nabenkörper und dem Schwungring eines Torsionsschwingungstilgers, d a d u r c h   g e k e n n z e i c h n e t ,   daß

a) der Ringkörper durch radiale Verformung gegen die Innenfläche des Schwungrings oder gegen die Außenfläche des Nabenkörpers gedrückt und dadurch auf Sollabmessungen vorgespannt wird, daß

b) der derart vorgespannte Ringkörper durch Abkühlen auf eine Temperatur unterhalb der Glasübergangstemperatur seines elastomeren Materials in dieser Form fixiert wird, daß

c) der Nabenkörper in den Innenraum des Ringkörpers eingeführt oder der Schwungring auf die Außenfläche des Ringkörpers aufgesetzt wird, und daß

d) der Ringkörper auf Raumtemperatur erwärmt und dadurch expandiert wird.

2. Verfahren nach Anspruch 1, dadurch gekennzeichnet, daß der Ringkörper durch Verwendung von Trockeneis oder flüssigem Stickstoff abgekühlt wird.

3. Verfahren nach einem der Ansprüche 1 oder 2, dadurch gekennzeichnet, daß auf die Innenfläche des Schwungringes und/oder auf die Außenfläche des Nabenkörpers ein Haftmittel aufgebracht wird.

0095595

4. Verfahren nach einem der Ansprüche 1 bis 3, dadurch gekennzeichnet, daß die einzelnen Schritte in einer Stickstoff-Atmosphäre durchgeführt werden.

0095595

**1. Stufe:**

**2. Stufe:**

**3. Stufe:** Abkühlung + Entfernung von 03 + 04

**4. Stufe:**

**5. Stufe:** Haftung durch Erwärmung

Europäisches
Patentamt

**EUROPÄISCHER RECHERCHENBERICHT**

0095595

Nummer der Anmeldung

EP 83 10 4459

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | | | F 16 B 4/00 |
| Y | DE-C- 686 214 (VERVOORT)<br>* Anspruch 1 *<br><br>--- | 1 | |
| Y | DE-C- 930 052 (KREISSIG)<br>* Seite 2, Zeile 95 ff *<br><br>--- | 1 | |
| Y | DE-U-1 663 894 (A. TEVES<br>MASCHINEN- UND ARMATURENFABRIK)<br>* Anspruch 1 *<br><br>--- | 1 | |
| Y | CH-A- 348 572 (LUXEMBOURGEOISE<br>DE BREVETS ET DE PARTICIPATIONS)<br>* Anspruch 1 *<br><br>--- | 1 | |
| Y | FR-A-1 465 179 (WALLACE-MURRAY<br>CORP.) * Figuren 1-5 *<br><br>--- | 1 | RECHERCHIERTE SACHGEBIETE (Int. Cl. ³) |
| Y | FR-A-1 580 303 (NORD-AVIATION<br>STE NATIONALE DE CONSTRUCTIONS<br>AERONAUTIQUES) * Anspruch 1 *<br><br>--- | 1 | F 16 B 4/00<br>F 16 F 15/10 |
| Y | GB-A-1 012 457 (ROBINS<br>CONVEYORS (SOUTH AFRICA PTY)<br>LTD.) * Anspruch 1 *<br><br>----- | 1 | |

Der vorliegende Recherchenbericht wurde für alle Patentansprüche erstellt.

| Recherchenort<br>BERLIN | Abschlußdatum der Recherche<br>03-08-1983 | Prüfer<br>ZAPP E |
|---|---|---|

KATEGORIE DER GENANNTEN DOKUMENTEN
X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
    nach dem Anmeldedatum veröffentlicht worden ist
D : in der Anmeldung angeführtes Dokument
L : aus andern Gründen angeführtes Dokument

& : Mitglied der gleichen Patentfamilie, überein-
    stimmendes Dokument

EPA Form 1503 03 82